# EUROPEAN PATENT SPECIFICATION

(11) **EP 0 619 945 B1**
(45) Date of publication and mention of the grant of the patent: **24.09.1997**
(21) Application number: 94301860.6
(22) Date of filing: 16.03.1994
(51) Int. Cl.: A01K 63/04, B65D 43/16

(54) **Water filtering apparatus for ornamental fish water tank**
Wasserfilter für Zierfischwassertank
Appareil de filtrage d'eau pour un récipient d'eau à poissons décoratif

(30) Priority: 19.03.1993 JP 18157/93 U
(43) Date of publication of application: 19.10.1994
(73) Proprietor: NISSO INDUSTRY CO., LTD., Tokyo 121 (JP)
(72) Inventor: Kikuta, Toshiki, c/o Nisso Industry Co., Ltd., Tokyo, 121 (JP)
(74) Representative: Smith, Norman Ian

(56) References cited:
- WO-A-92/21620
- GB-A- 2 226 940
- GB-A- 2 239 402

## Description

This invention relates to a water filtering apparatus for an ornamental fish water tank of an ornamental fish keeping system for keeping ornamental fish, in particular tropical fish. GB-A-2,226,940 discloses such an apparatus having the features as set forth in the preamble portion of claim 1.

An ornamental fish keeping system consists of a water tank, a cover, an ornamental fish illuminating device, and a filtering apparatus for the ornamental fish water tank.

Of the various parts of the ornamental fish keeping system, the filtering apparatus physically and biologically filters and removes foul matter from the water in the water tank.

The filtering apparatus and the illuminating device have generally been designed to be used as a cover or lid for the open top portion of the water tank.

The conventional filtering apparatus has a filtering mechanism for filtering water sucked up from the water tank by a pump. The filtering mechanism is housed in a filter tank casing and a lid is placed on the casing so as to cover its open top.

As a result, by simply removing the lid from the filter tank casing the filter medium of the filtering mechanism can be easily checked for clogging of the medium and other required repairs.

According to the conventional water filtering apparatus for an ornamental fish water tank, the lid is simply placed on the filter tank casing, so that it is necessary to transfer it to a suitable surface after it is taken off the filtering apparatus for maintenance and inspection of the filtering mechanism.

Consequently, when no suitable surface is available for placing the lid of the water filtering apparatus or the filter tank casing, it is necessary to prepare one near the apparatus or the casing.

In addition, caution is needed to prevent wetting of the receiving surface by water drops adhering to the inner surface of the lid.

The present invention has been accomplished to overcome the aforesaid inconveniences and problems of the conventional water filtering apparatus for an ornamental fish water tank.

It is the object of the present invention to provide a water filtering apparatus for an ornamental fish water tank provided with a filter tank casing and a lid mounted on the casing and more particularly to provide such a water filtering apparatus wherein the top portion of the filter tank casing can be opened for maintenance and inspection of a filter mechanism without removing the lid and wherein the lid can easily be removed from the filter tank casing when necessary.

According to the present invention there is provided a water filtering apparatus for an ornamental fish water tank, comprising a filter mechanism for filtering water in the water tank, a filter tank casing housing the filter mechanism, a lid covering an open top portion of the filter tank casing, the water filtering apparatus being characterised in that it comprises at least two hinge portions mounted on either the filter tank casing or the lid and each consisting of a rotary shaft and supporting pieces supporting the rotary shaft, and at least two rotary shaft supporting portions mounted on either the lid or the filter tank casing and each consisting of a bearing for rotatably supporting the rotary shaft such that the rotary shaft can be inserted in and removed from the bearing and a resilient piece provided with a claw portion for preventing escape of the rotary shaft from the bearing.

According to the water filtering apparatus of the present invention, it is possible to detach and attach the lid from and to the filter tank casing by removing and inserting the rotary shaft from and into the bearing against urging force of the resilient piece. Additionally, the lid can be rotated around the rotary shaft to open the top of the filter tank casing.

The present invention will become more apparent from the description given hereinbelow with reference to the accompanying drawings, in which:

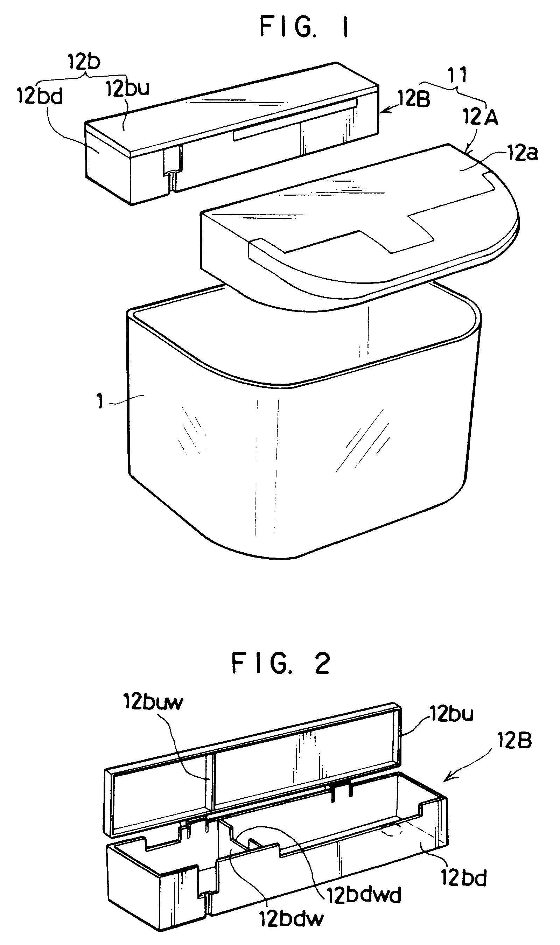

Figure 1 is an exploded perspective outline view depicting the structure of the ornamental fish water tank using the water filtering apparatus according to an embodiment of the present invention.

Figure 2 is a perspective view showing the water filtering apparatus for an ornamental fish water tank with its lid open.

Figure 3A is a partially cutaway perspective view showing how a hinge portion and a rotary shaft supporting portion are assembled.

Figure 3B is a partly broken away side elevation viewed in the direction of the arrow in Figure 3A.

Figure 4A is an explanatory view showing the lid closed.

Figure 4B is an explanatory view showing the lid open.

Hereinafter, an embodiment of the water filtering apparatus for an ornamental fish water tank of the present invention will be described with reference to the accompanying drawings.

In the drawings, 1 designates a water tank open at the top and 11 a lid covering the open top of the water tank 1. The lid 11 consists of an ornamental fish illuminating device 12A having a fluorescent lamp attached to its bottom surface and an ornamental fish water tank filtering apparatus 12B for filtering the water in the water tank 1.

The illuminating device 12A is placed to cover the front top of the water tank 1 and the water tank filtering apparatus 12B is positioned to cover the rear top of the water tank 1.

The casing 12b of the water tank filtering apparatus 12B consists of a filter tank casing 12bd housing a filter mechanism (not shown) and a lid 12bu covering the open top of the filter tank casing 12bd.

The filter tank casing 12bd has a partition 12bdw for dividing it into a pump compartment and a filter mechanism compartment. The partition 12bdw has a cut-out portion 12bdwd formed in its upper edge for passing a water discharging pipe of the pump.

A partition 12buw is provided on the inner wall of the lid 12bu at a position corresponding to the partition 12bdw so as to prevent water from the filter mechanism from entering to the pump side.

The pump and filter mechanism housed in the filter tank casing 12bd are omitted from the drawings. Also not shown are a pipe and a strainer extending downward from the filter tank casing 12bd and power cords for the illuminating device 12A and the water tank filtering apparatus 12B.

Reference numeral 13 designates one of the hinge portions. Each hinge portion consists of a rotary shaft 14 and a pair of supporting pieces 15 extending from the rear surface of the lid 12bu so as to support both ends of the rotary shaft 14.

Each supporting piece 15 has an abutting surface 15f that abuts on the rear surface of the filter tank casing 12bd when the lid 12bu is open and makes an angle of about 95° with respect to the rear surface of the filter tank casing 12bd when the lid 12bu is closed.

Reference numeral 16 designates one of two rotary shaft supporting portions formed complementary to the hinge portions 13. Each rotary shaft supporting portion 16 consists of a bearing 17 having the shape of an angular bracket when seen from above and a resilient piece 18. The bearing 17 has a pair of U-shaped recessed portions 17d into which the rotary shaft 14 can be inserted to be rotatably supported thereby. The bearing 17 extends rearward from the rear surface of the filter tank casing 12bd. The upper edge of the resilient piece 18 is formed as a claw portion 18n for holding the rotary shaft 14 and preventing it from escaping from the recessed portion 17d of the bearing 17. The resilient piece 18 is formed integrally with the filter tank casing 12db by forming a pair of slits 19 in the casing 12db. The bearing 17 is bonded to the outer surface of the resilient piece 18.

Next, the insertion and removal and the opening and closing of the lid will be explained.

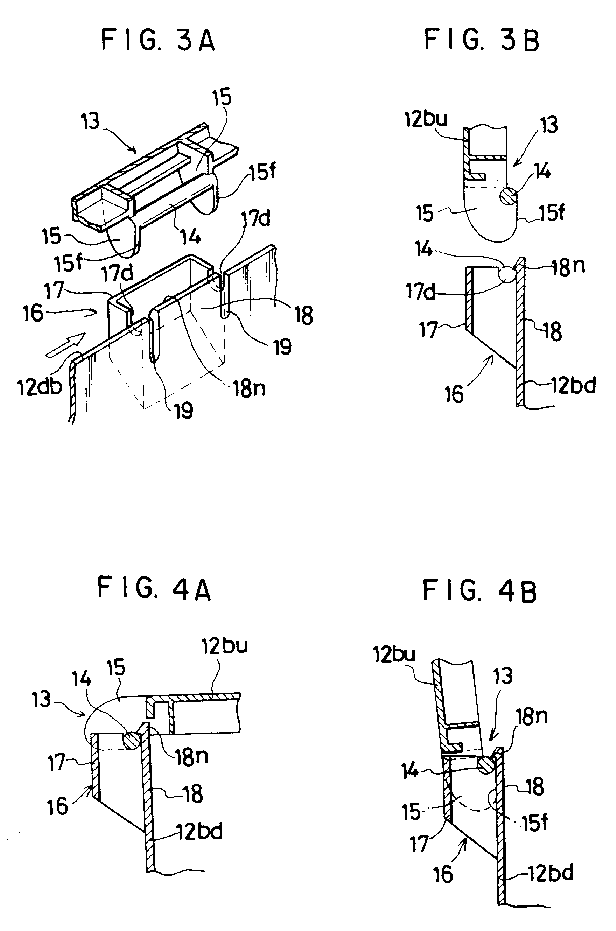

The insertion and removal of the lid 12bu will be described first. When the lid 12bu is oriented as shown in Figure 3B and then pushed down so as to press the rotary shaft 14 into the recessed portions 17d of the bearing 17, the rotary shaft 14 forces the claw portion 18n to flex the resilient piece 18 to the right as seen in Figure 3B. Thus, it is possible to insert the rotary shaft 14 into the recessed portions 17d.

In this condition, the supporting pieces 15 sandwich and press onto the outside surface of the bearing 17, while the rotary shaft 14 is held by the claw portion 18n of the resilient piece 18 which has sprung back to its original condition. As a result, the rotary shaft 14 cannot easily escape from the recessed portions 17d.

For removing the lid 12bu, the rotary shaft 14 is raised from its position in the recessed portions 17d. Since this causes the rotary shaft 14 to press the claw portion 18n to the right, the resilient piece 18 flexes to the right, making it possible to draw the rotary shaft 14 out of the recessed portions 17d.

Thus by inserting and removing the rotary shaft 14 into and out of the bearing 17, the lid 12bu can be attached to and detached from the filter tank casing 12bd.

Next, opening and closing of the lid 12bu will be explained. When the lid 12bu is closed as shown in Figure 3A, it lies horizontally to cover the top portion of the filter tank casing 12bd. Then when it is rotated counterclockwise around the rotary shaft 14 until the abutting surfaces 15f of the supporting piece 15 abut against the rear surface of the filter tank casing 12bd, the lid 12bu is held open as shown in Figure 4B.

To close the lid 12bu again, it is rotated clockwise from the open condition shown in Figure 4B until it again assumes the closed state shown in Figure 4A, thus closing the top of the filter tank casing 12bd.

Owing to the above-described configuration of the embodiment of the water filtering apparatus for an ornamental fish water tank of the present invention, the lid 12bu can be rotated around the rotary shaft 14 in order to open the top of the filter tank casing 12bd. It is thus possible to open the top of the filter tank casing 12bd for maintenance and inspection of the filter mechanism without removing the lid 12bu.

Moreover, if the lid 12bu is found to obstruct maintenance and inspection of the filter mechanism of the water filtering apparatus even when open, it can be easily removed from the filter tank casing 12bd.

Also, because the opening angle of the lid 12bu can be made almost vertical, the lid can be easily grasped for closing. It thus has improved operability.

Since the engagement of the supporting pieces 15 with the bearing 17 restricts the movement of the lid parallel to the rotary shaft 14, the lid 12bu can always be closed to completely cover the top of the filter tank casing 12bd.

Although the embodiment described in the foregoing has two hinge portions 13 and rotary shaft supporting portions 16, it is possible to provide more than two of these members.

In the foregoing embodiment, the hinge portions 13 are mounted on the lid 12bu and the rotary shaft supporting portions 16 are mounted on the filter tank casing 12bd. However, the same effect can be achieved by mounting the hinge portions on the filter tank casing 12bd and the rotary shaft supporting portions on the lid 12bu.

Although in the embodiment of the water filtering apparatus described in the foregoing the opening angle of the lid 12bu is almost vertical, it is possible to freely set the opening angle of the lid 12bu to any angle greater than 90° by changing the angle of the abutting faces 15f of the supporting pieces 15.

Furthermore, in the described embodiment, each bearing 17 is sandwiched by the supporting pieces 15 which contact its outer sides to restrict movement of the lid 12bu parallel to the rotary shaft 14. The invention is not limited to this arrangement, however, and any other structure can be employed insofar as the engagement of the hinge portions 13 with the rotary shaft supporting portions 16 restricts movement of the lid 12bu parallel to the rotary shaft 14.

As described above, according to the above-described embodiment, it is possible to rotate the lid around the rotary shafts in order to open the top of the filter tank casing and it is also possible to carry out inspection and maintenance of the filter mechanism without removing the lid.

If, for example, the lid obstructs inspection of the filter mechanism, it can be removed from the filter tank casing without difficulty.

Since that opening angle of the lid is determined by the supporting pieces, it is possible to set an opening angle which makes the lid easy to grasp when it is to be closed.

Furthermore, since the engagement of the hinge portions with the rotary shaft supporting portions restricts movement of the lid parallel to the rotary shafts, it is possible to completely cover the top of the filter tank casing when the lid is closed.

## Claims

1. A water filtering apparatus (12B) for an ornamental fish water tank (1), comprising a filter mechanism for filtering water in the water tank, a filter tank casing (12bd) housing the filter mechanism, and a lid (12bu) covering an open top portion of the filter tank casing, said water filtering apparatus (12B) being characterised in that it comprises at least two hinge portions (13) mounted on either the filter tank casing (12bd) or the lid (12bu) and each consisting of a rotary shaft (14) and supporting pieces (15) supporting said rotary shaft, and at least two rotary shaft supporting portions (16) mounted on either the lid (12bu) or the filter tank casing (12bd) and each consisting of a bearing (17) for rotatably supporting said rotary shaft such that said rotary shaft can be inserted in and removed from said bearing and a resilient piece (18) provided with a claw portion (18n) for preventing escape of said rotary shaft from said bearing.

2. The water filtering apparatus according to claim 1, characterised in that said supporting pieces (15) abut against said filter tank casing (12bd) or said lid (12bu) to hold said lid (12bu) open after said lid (12bu) has been rotated around said rotary shaft (14) to open the top portion of said filter tank casing (12bd).

3. The water filtering apparatus according to claim 1 or claim 2, characterised in that engagement of said hinge portions (13) with said rotary shaft supporting portions (16) restricts said lid (12bu) from moving parallel to said rotary shaft (14).

## Patentansprüche

1. Filtereinrichtung (12B) für ein Zierfischaquarium (1) mit einem Filtermechanismus zum Filtern des Aquariumwassers, einem den Filtermechanismus aufnehmenden Filtergehäuse (12bd) und einer Klappe (12bu) zur Abdeckung des oben offenen Filtergehäuses an seinem oberen Ende, wobei die Filtereinrichtung (12B) dadurch gekennzeichnet ist, daß sie zumindest zwei Gelenkteile (13) in der Zuordnung zum Filtergehäuse (12bd) bzw. der Klappe (12bu) aufweist, von denen jedes eine drehbare Welle (14) sowie Lagerteile (15) zum Halten der Welle (14) in der Zuordnung zum Filtergehäuse (12bd) oder zur Klappe (12bu) aufweist und daß sie außerdem mindestens zwei Drehwellenaufnahmen (16) in der Zuordnung zur Klappe (12bu) oder zum Filtergehäuse (12bd) aufweist, wobei jede Drehwellenaufnahme (16) zur drehbaren Lagerung einer der Drehwellen eine Lagerung (17) derart aufweist, daß die Drehwellen (14) in die Lagerungen (17) eingesetzt und aus ihnen herausgenommen werden können und ein elastisch verformbares Bauteil (18) mit einem Klauenabschnitt (18n) für jede Drehwellenaufnahme vorgesehen ist, wobei der Klauenabschnitt ein unkontrolliertes Herausgelangen der Drehwelle aus der Lagerung verhindert.

2. Filtereinrichtung nach Anspruch 1, dadurch gekennzeichnet, daß die Lagerteile (15) am Filtergehäuse (12bd) oder der Klappe (12bu) derart anliegen, daß sie die Klappe (12bu) nach ihrem Schwenken um die Längsachse der Drehwelle (14) in einer Stellung halten, in der das Innere des Filtergehäuses (12bd) von oben her frei zugänglich ist.

3. Filtereinrichtung nach Anspruch 1 oder Anspruch 2, dadurch gekennzeichnet, daß die mindestens zwei Gelenke (13) so ausgebildet und Filtergehäuse (12bd) bzw. Klappe (12bu) so zugeordnet sind, daß Seitenverschiebungen der Klappe (12bu) relativ zum Filtergehäuse (12bd) parallel zu den Drehwellen (14) der Gelenke (13) verhindert sind.

## Revendications

1. Un appareil de filtrage d'eau (12B) pour un aquarium de poissons d'ornement (1), comprenant un mécanisme de filtrage pour filtrer l'eau contenue dans l'aquarium, un boîtier de filtrage (12bd) dans lequel est monté le mécanisme de filtrage, et un couvercle (12bu) recouvrant une partie supérieure ouverte du boîtier de filtrage, ledit appareil de filtrage d'eau (12B) étant caractérisé en ce qu'il comprend au moins deux parties d'articulation (13) montées soit sur le boîtier de filtrage (12bd) soit sur le couvercle (12bu) et se composant chacune d'un arbre tournant (14) et de pièces de support (15) portant ledit arbre tournant, et au moins deux parties de support (16) de l'arbre tournant montées soit sur le couvercle (12bu) soit sur le boîtier de filtrage (12bd) et se composant chacune d'un palier (17) pour porter de manière rotative ledit arbre tournant de telle manière que ledit arbre tournant puisse être inséré dans le palier et retiré de ce dernier et une pièce élastique (18) présentant une partie en forme de griffe (18n) pour éviter que l'arbre tournant s'échappe dudit palier.

2. Appareil de filtrage d'eau selon la revendication 1, caractérisé en ce que lesdites pièces de support (15) viennent en butée contre le boîtier de filtrage (12bd) ou ledit couvercle (12bu) pour maintenir ledit couvercle (12bu) ouvert après que ledit couvercle (12bu) a été amené à pivoter autour dudit arbre tournant (14) pour ouvrir la partie supérieure dudit boîtier de filtrage (12bd).

3. L'appareil de filtrage d'eau selon la revendication 1 ou la revendication 2, caractérisé en ce que l'engagement desdites parties d'articulation (13) avec lesdites parties de support (16) de l'arbre tournant limite le mouvement dudit couvercle (12bu) parallèlement audit arbre tournant (14).
